# EUROPEAN PATENT APPLICATION

(11) **EP 2 053 865 A1**
(43) Date of publication of application: **29.04.2009**
(21) Application number: 07118437.8
(22) Date of filing: 15.10.2007
(51) Int. Cl.: H04N 7/52, H04N 7/24, H04N 7/26

(54) **Digital content analysis, encoding and decoding for buffer level management purposes**

(71) Applicant: Thomson Licensing, 92100 Boulogne-Billancourt (FR)
(72) Inventor: Henry, Jean-Baptiste, 35520 Melesse (FR)
(74) Representative: Berthier, Karine

(57) **Abstract**

An encoder (122) comprises a module (123) for analysing digital, advantageously audio-visual, content (CNT) to be encoded and a module (124) for encoding the content (CNT). The analysis module (123) detects the parts of the content that may be dropped or duplicated with minimum effect to the digital content (CNT) when it is rendered so as to be rendered with little disturbance to the user, e.g. a completely black frame of video, and indicates this to the encoding module (124) that tags the encoded content (CNT') accordingly. A decoder (142) may then drop or duplicate parts of the content if needed owing to buffer fill problems, preferably at sample boundaries, and it is advantageous that the decoder (142) drops or duplicates continuous content and modifies the rendering of discrete content to keep synchronization, if the content comprises such parts.

## Description

### FIELD OF THE INVENTION

The present invention relates generally to digital content processing, and in particular to encoding and decoding of such content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

When digital content is distributed in push mode (TV is the typical example), a complex issue appears: the synchronization of clocks between the sender and the receiver, as the receiver has to consume the content data at the exact same pace as it is sent out by the sender. If this is not the case, the receiver will face some underflow or overflow issues (i.e. packets will arrive too late, or too quickly). It should be noted that while the synchronization problem may occur for any kind of digital content - such as for example audio, video, subtitles, teletext and auxiliary data - it is particularly common for audio-video content, which will hereinafter be used as a nonlimiting example.

One solution to this problem is to use existing technologies to synchronize the clocks, such as for example Program Clock Reference (PCR) in MPEG (Motion Picture Expert Group) standards, and RTCP (Real-Time Transport Control Protocol, the RTP companion protocol) sender report packets combined with Network Time Protocol (NTP) packets for Real-Time Transport Protocol (RTP). However, when clock synchronization is not possible it is still possible to operate in free-running clock mode. This mode means that the receiver clock will be running free, and the only thing to do is to hope that its pace will be close enough from the sender one, so that underflow and overflow are avoided.

In free-running clock mode, the receiver receives the data packets and displays the content on screen and renders the sound. The receiver has a receiving buffer to accommodate transport jitter and also the difference of pace between the sender and the receiver itself. When this buffer is emptied (i.e. the receiver consumes packets faster than the sender sends them), one solution is for the receiver to duplicate images while it waits for the buffer to refill. When the buffer becomes full (i.e. the sender sends packets faster than the receiver consumes them), the receiver has to drop images to catch up with the sender pace. This behaviour allows minimizing the impact of overflow/underflow errors on the screen. This free-running clock mode is currently deployed in broadband TV.

A number of solutions have been proposed in order to overcome the overflow problem by tagging packets with low importance for the decoding of an audio-video stream. EP 1622385 proposes first dropping B frames, then P frames and, if necessary, every second I frame. Other documents, e.g. WO 2005/076218, WO 2006/61801, US 20050021806, US 4769810, and US 4796811, describe similar solutions.

Unfortunately, however, content rendered using the proposed methods may still disturb the user. The reason is that the duplication or drop of an image and its associated audio is based on the encoding process. This may be noticeable by the end-user, because the level of encoding of an image has nothing to do with its semantic value, i.e. the content understood by the end-user. This degrades the quality of experience of the played content, if done abruptly.

It can therefore be appreciated that there is a need for a solution that allows encoding and decoding of the content so that images and sound can be gracefully dropped or duplicated so as to minimize the disturbance to the rendered content to the end-user. This invention provides such a solution.

### SUMMARY OF THE INVENTION

In a first aspect, the invention is directed to an encoder for digital content comprising an analysis module adapted to analyse the digital content semantically so as to detect parts of the content that can be dropped or duplicated with minimum effect to the digital content when it is rendered; and an encoding module adapted to encode the digital content and to tag the encoded content so as to indicate the parts of the digital content that can be dropped or duplicated with minimum effect to the digital content when it is rendered following information received to this end from the analysis module. The parts advantageously correspond to samples of the content.

In a preferred embodiment, the analysis module is adapted to decide that a sample can be dropped or duplicated with minimum effect to the digital content when it is rendered is taken if a difference between the sample and a preceding sample is below a threshold value.

In a second aspect, the invention is directed to a method for method for encoding digital content. A semantic analysis of the digital content is performed so as to detect samples of the content that can be dropped or duplicated with minimum effect to the digital content when it is rendered; the digital content is encoded to obtain samples of encoded content; and the samples of encoded content are tagged so as to indicate samples of digital content that can be dropped or duplicated with minimum effect to the digital content when it is rendered.

In a preferred embodiment, it is detected that a sample of digital content that can be dropped or duplicated with minimum effect to the digital content when it is rendered if a difference between the sample a preceding sample is below a certain threshold.

In a further preferred embodiment, the content is audiovisual content.

In a third aspect, the invention is directed to a decoder for encoded digital content. The decoder comprises a reading module adapted to read tags of samples of the encoded content so as to detect samples of corresponding decoded digital content that may be dropped or duplicated; a decoding module for decoding encoded digital content to obtain samples of decoded digital content; a buffer for storing the samples; and a module for controlling the duplication or the dropping of samples of decoded digital content according to information provided by the reading module.

In a preferred embodiment, the controlling module is adapted to, if the decoded digital content comprises a continuous component and a discrete component, the components being synchronized, drop or duplicate samples of the continuous component and modify rendering of the discrete component to keep the synchronization.

### BRIEF DESCRIPTION OF THE DRAWINGS

Preferred features of the present invention will now be described, by way of example, with reference to the accompanying drawings, in which:
Figure 1 illustrates a system for audio-video transmission and reception according to a preferred example of the invention;
Figure 2 illustrates the encoder and the decoder of Figure 1 in greater detail;
Figure 3 illustrates exemplary audio and video samples;
Figure 4 illustrates an exemplary situation in which the invention may be employed;
Figure 5 illustrates portions of a data stream that are suitable candidates for dropping;
Figure 6 illustrates an exemplary method of dropping audio samples;
Figure 7 illustrates the samples rendered after dropping of samples as in Figure 6; and
Figure 8 illustrates duplication of samples.

### PREFERRED EMBODIMENT OF THE INVENTION

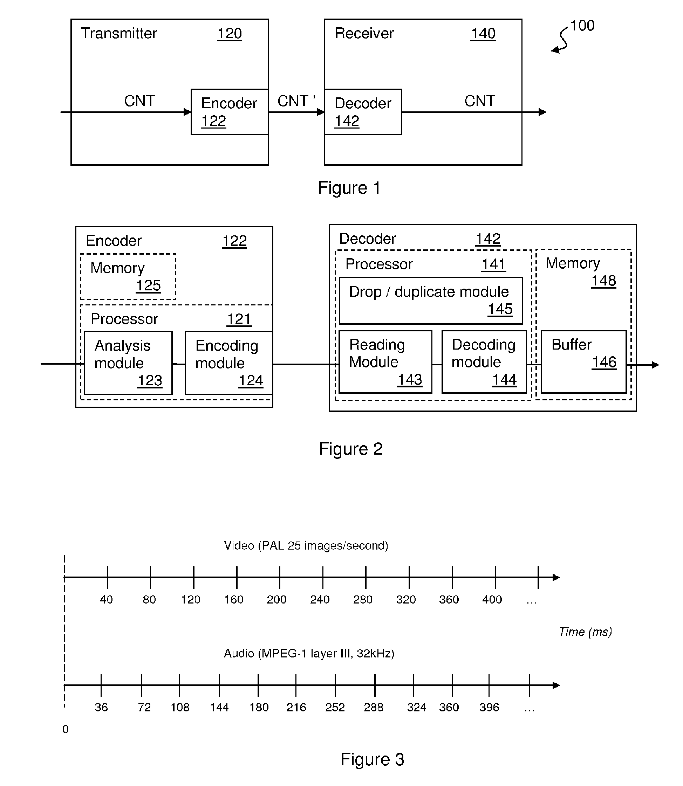

Figure 1 illustrates a system 100 for audio-video transmission and reception according to a preferred example of the invention. The system 100 comprises a transmitter 120 having an encoder 122 that preferably is implemented in one or more hardware circuits, but which may also be implemented in software. The system 100 further comprises a receiver 140 having a decoder 142, preferably implemented in one or more hardware circuits, but which may also be implemented in software, or a combination of the two. It should be noted that while it is advantageous that the transmitter comprises a separate audio encoder and the receiver a separate audio decoder, these are not illustrated for the sake of clarity.

Simplifying a bit, the transmitter 120 receives content CNT, encodes the content, and transmits the encoded content CNT'. The receiver 140 then receives the encoded content CNT', decodes the encoded content CNT', and usually forwards the content CNT to another circuit for rendering (which is outside the scope of the invention). In the description and the claims, the word "sample" may be employed to describe one unit (such as one video image or limited duration of sound) of the content, be it encoded or not. The word packet may be used to describe encoded content when it is transported between the encoder and the decoder. A sample may be transported in one or more packets, and a packet may transport one or more samples of encoded content.

Figure 2 illustrates in more detail the encoder 122 and the decoder 142 of Figure 1. The encoder 122 has knowledge of the content that it encodes, for example by analysis of the content in an analysis module 123. This enables an encoder module 124 to tag specific samples of the elementary stream, making it possible to signal for each sample if it can be gracefully dropped or duplicated (i.e. with minimum deteriorating effect to the content when it is rendered), or any other operation that may be performed. The decoder 142 comprises a module 143 for reading the tags and indicating what samples may be dropped or duplicated, a module 144 for decoding the samples, and a module 145 to drop or duplicate samples if necessary, as indicated by the module 143. The decoder also comprises a buffer 146 and the drop/duplicate module 145 may take the decision to drop or duplicate samples based on a buffer fill level, i.e. to drop samples if the buffer becomes too full and duplicate samples if it becomes too empty.

As illustrated in Figure 2, the encoder 122 comprises at least one processor 121 that embodies the calculation functions of the analysis module 123 and the encoding module 124, and a memory 125 adapted to store digital content. The decoder 142 comprises at least one processor 141 that embodies the calculation functions of the reading module 143, the decoding module 144, and the drop/duplicate module 145, and at least one memory 148 embodying the buffer 146 and other data.

### Video encoding

A picture which is identical with the previous one is easily detectable at the encoder's level. A dark image, a real black image, also is detectable. It is also possible to define thresholds that indicate that one image is 'almost identical' to the previous image if the difference between the two is small. In a preferred embodiment, an image is regarded as error-friendly if the difference is below a certain threshold whose value is dependent on the implantation, and possibly also the content. In a further preferred embodiment, a number of thresholds may be used so as to quantify just how error-friendly an image is. Sound, as will be seen hereinafter, may be treated in a similar manner.

This information enables the encoder to tag samples in the bitstream as 'error-friendly', i.e. samples that may be dropped or duplicated with a minimum of disturbance to the user when it comes to the rendered video.

The most general inventive concept relating to video is thus to analyse the content to detect samples that are 'error-friendly' and to tag them accordingly. Hereinafter are described a number of exemplary embodiments to do this. It should be noted that while these exemplary embodiments use MPEG-2 encoding technology, any other encoding technology that enables the tagging according to the invention may also be used.

Table 1 shows the picture header of a MPEG2 video frame (that can be considered as a sample for the invention) is shown.

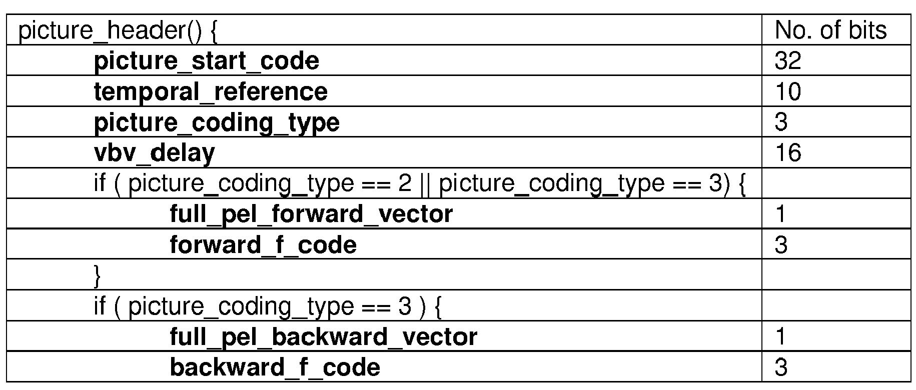

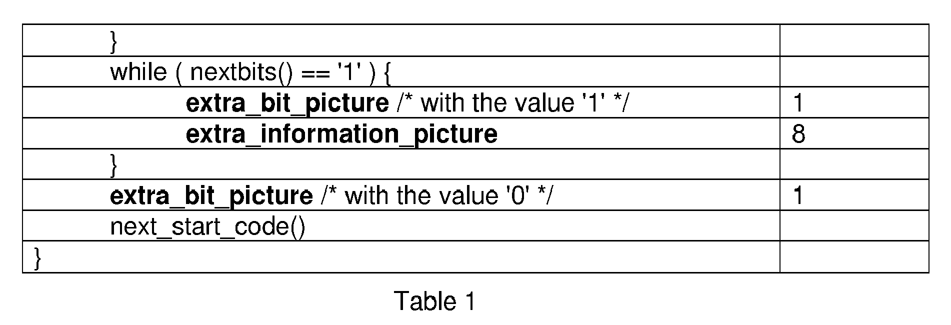

A first embodiment uses the picture_coding_type field to tag video packets. Table 2 shows the values of the picture_coding_type field as they are defined in MPEG-2 specification (13818-2).

**Table 2**

| **picture_coding_type** | **Coding method** |
|---|---|
| 000 | Forbidden |
| 001 | intra-coded (I) |
| 010 | predictive-coded (P) |
| 011 | bidirectionally-predictive-coded (B) |
| 100 | Shall not be used (dc intra-coded (D) in ISO/IEC11172-2) |
| 101 | Reserved |
| 110 | Reserved |
| 111 | Reserved |

As can be seen in Table 2, the first bit of this 3-bit field is not used. In the first embodiment, this bit is used to transport the error-friendly tag. Thus, 001 would mean regular (or none error-friendly) I picture, while 101 would mean error-friendly I picture. The same applies for the P and B pictures. A disadvantage of the first embodiment is that decoders that are not compliant may reject the picture_coding_type values used in the first embodiment.

A second embodiment uses at least one bit of the extra_information_picture field to tag samples as 'error-friendly'. According to the present MPEG-2 standard, this field is not to be used, but its goal is clearly to put additional information in a simple way, i.e. no need for complex new extension structure. It would thus be possible to use this 8-bit field to convey 'error-friendly' information. In its simplest form, one bit is sufficient, with a '1' indicating that the packet is 'error-friendly' and a '0' that it is not. Having 8 bits at disposal, it is also possible to define a more complex error-friendly hierarchy: for example, 8 bits allow 256 values, with value 0 as the most important and 256 at the less important. In this case, a sample tagged with a 0 would be very error-friendly while a sample tagged with the value 256 would be error-friendly, but more noticeable to the user during rendering.

A third embodiment uses a new extension structure to tag 'error-friendly' samples. Table 3 shows the allowed values for extension in MPEG-2. As can be seen, a number of extensions ("Reserved") are not currently used and may thus be used for developments, such as tagging according to the third embodiment of the invention.

**Table 3**

| **extension_start_code_identifier** | **Name** |
|---|---|
| 0000 | Reserved |
| 0001 | Sequence Extension ID |
| 0010 | Sequence Display Extension ID |
| 0011 | Quant Matrix Extension ID |
| 0100 | Copyright Extension ID |
| 0101 | Sequence Scalable Extension ID |
| 0110 | Reserved |
| 0111 | Picture Display Extension ID |
| 1000 | Picture Coding Extension ID |
| 1001 | Picture Spatial Scalable Extension ID |
| 1010 | Picture Temporal Scalable Extension ID |
| 1011 | Camera Parameters Extension ID |
| 1100 | ITU-T extension ID |
| 1101 | Reserved |
| ... | ... |
| 1111 | Reserved |

Table 4 shows a preferred new extension structure:

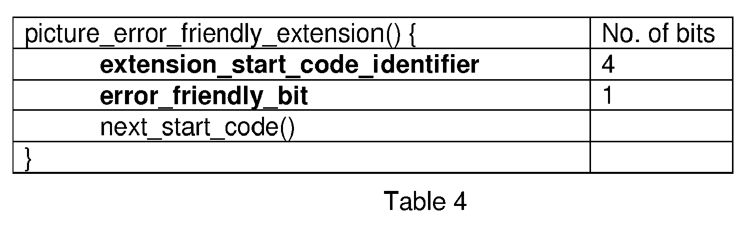

The error_friendly_bit would thus be used by the encoder to tag 'error-friendly' samples as described hereinbefore. Again, it is possible to define more than one bit in case the system can advertise more fine-grained error-friendly values.

### Audio encoding

The inventive concept described hereinbefore also applies to sound: by analyzing the content, the encoder knows when there is no more sound, or when the volume is very low, or when a sound is repeating through a specific duration (same frequencies, etc), and is thus able to tag the resulting audio samples as 'error-friendly'. For sound, each encoded sample advantageously represents a sound of a predetermined duration.

Table 5 shows the MPEG audio header that precedes an audio frame (considered as a sample for the invention). The private bit (position 23) may be used to tag an audio sample as 'error-friendly'.

**Table 5**

| **Position** | **Length** | **Meaning** |
|---|---|---|
| 0 | 11 | Frame sync to find the header (all bits are always set to 1) |
| 11 | 2 | Audio version ID (see table 3.2 also) |
| | | 00 - MPEG Version 2.5 (unofficial extension of MPEG 2) |
| | | 01 - reserved |
| | | 10 - MPEG Version 2 (ISO/IEC 13818-3) |
| | | 11 - MPEG Version 1 (ISO/IEC 11172-3) |
| 13 | 2 | Layer index |
| | | 00 - reserved |
| | | 01 - Layer III |
| | | 10 - Layer II |
| | | 11 - Layer I |
| 15 | 1 | Protection bit |
| | | 0 - protected by 16 bit CRC following header |
| | | 1 - no CRC |
| 16 | 4 | Bitrate index |
| 20 | 2 | Sampling rate index |
| 22 | 1 | Padding bit |
| | | If it is set, data is padded with with one slot (important for frame size calculation) |
| 23 | 1 | Private bit (only informative) |
| 24 | 2 | Channel mode |
| | | 00 - Stereo |
| | | 01 - Joint Stereo (Stereo) |
| | | 10 - Dual channel (Two mono channels) |
| | | 11 - Single channel (Mono) |
| | | Note: Dual channel files are made of two independent mono channels. Each one uses exactly half the bitrate of the file. Most decoders output them as stereo, but it might not always be the case. |
| 26 | 2 | Mode extension (Only used in Joint Stereo) |
| 28 | 1 | Copyright bit (only informative) |
| 29 | 1 | Original bit (only informative) |
| 30 | 2 | Emphasis |
| | | 00 - none |
| | | 01 - 50/15 ms |
| | | 10 - reserved |
| | | 11 - CCIT J.17 |
| | | The emphasis indication is here to tell the decoder that the file must be de-emphasized, that means the decoder must 're-equalize' the sound after a Dolby-like noise suppression. It is rarely used. |

### Audio-video synchronization

Audio and video are not always encoded with the same sample time length. For example, in MPEG-2, the video typically has a picture length of 40 ms for PAL (25 pictures per second) and about 33 ms for NTSC (29.97 pictures per second), while audio, when encoded with MPEG-1 layer II or layer III, has a frame length of (i.e. an audio packet corresponds to) 24 ms for 48 kHz, about 26ms for 44,1 kHz and 36 ms for 32 kHz.

It will thus be appreciated that there often is a difference between the video and the audio sample rate. Figure 3 illustrates exemplary audio samples (MPEG-1 layer III, 32 kHz) and video samples (PAL 25 images/second) and their duration from a zero starting point.

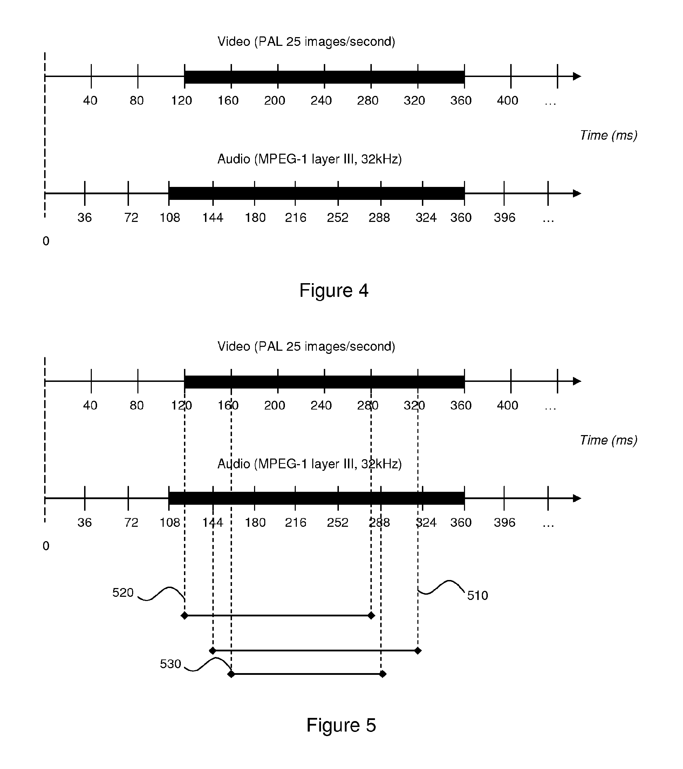

The ideal situation for sample dropping or duplication is a fade to black in the video sequence for which the corresponding audio samples may be dropped as well, thus allowing the removal or duplication of several pictures and audio samples. Figure 4 illustrates an example such a fade to black, with samples that are 'error-friendly'. In the upper part of the figure are shown a number of video samples that can be dropped; 6 samples from 120 ms to 360 ms (indicated by a thick black line). In the lower part of the figure are shown a number of audio samples that can be dropped; 7 samples from 108 ms to 360 ms (indicated by a thick black line).

In the exemplary case, the decoder can decide to drop a portion of the stream. A number of possibilities are shown in Figure 5: exemplary portions that can be cut with an unnoticeable effect for the user are indicated by reference numbers 510, 520, and 530. It should be noted that it is not necessary for such a portion to be bounded by the same content type sample limits on both sides; it is possible that the bounds are an audio sample limit on one side and a video sample limit on the other side, as is exemplified by the portions with reference numbers 510 and 530.

In order to keep synchronization, both audio and video need to be cut or duplicated. For this reason, it may be simpler to base the cutting on the audio as the samples represent continuous samples, while video is just a series of still pictures, and displaying a still picture for longer or for shorter than 40 ms is easy, while playing an audio sample for another duration than the planned one (36ms) is more complex. Technically it is possible to cut at any point, but the simplest solution is to cut at audio sample edges. In a general case, it is preferred to cut or duplicate continuous content such as sound rather than discrete content such as images.

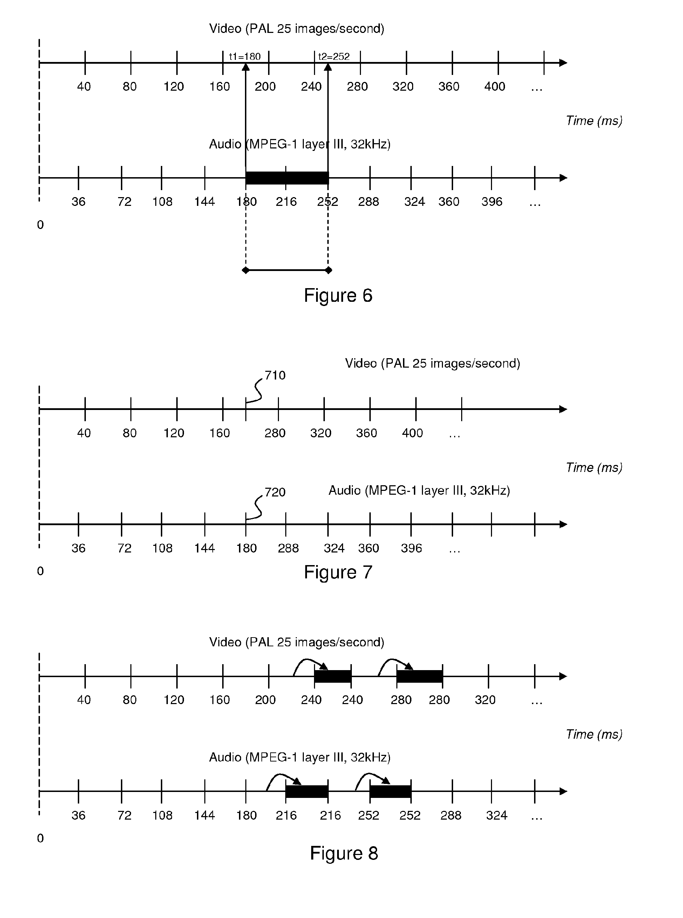

Figure 6 illustrates an example illustrating how sound may advantageously be cut. In the example the audio packets beginning at 180 ms and 216 ms may be dropped, and in order to keep the sound synchronized with the video, video samples may either be dropped or displayed for an adjusted duration of time. The video sample beginning at 160 ms is displayed until 180 ms (i.e. only 20 ms instead of the normal 40 ms), the next video sample (originally scheduled to be rendered at 200 ms) is dropped, and the third video sample (originally scheduled to be rendered at 240 ms) is displayed between 252 ms and 280 ms for a total of 28 ms. As will be readily appreciated the display time of the first and the third sample depends on the timing of the dropped audio packets.

It is to be noted that in this example the video is not tagged as error-friendly, but the decoder decides to cut despite of this because of a buffer fill level too high. This is not important since the goal of this example is to clearly demonstrate the relationship between the audio and video cuts when dropping samples.

Figure 7 illustrates the audio and video samples as rendered. Reference number 710 illustrates the limit at 180 ms between the first and the third samples (the second sample being dropped). Reference number 720 illustrates the limit between the audio samples on either side of the dropped audio samples. It should be noted that the time indicated in Figure 7 corresponds to the original time before the samples were dropped, i.e. the video sample tagged as beginning at 280 ms is the same in Figure 6 and Figure 7, but it should be noted that it is not displayed at 280 ms, but at 252 ms, as described hereinbefore It will thus be appreciated that after the cut, the samples are rendered in a timely manner.

When performing drop or duplicate operations, the decoder needs to resynchronize its local clock to match the upcoming Packet Time Stamp (PTS) values. In the example, the local clock jumps immediately from 180 ms to 252 ms. In the previous example, when cutting 2 audio samples (meaning 72 ms of stream time), the decoder's local clock will be advanced by 72 ms, in order to render immediately the next audio and video samples.

When the decoder encounters low-level buffer issues, it can decide to duplicate samples in order to wait for new data to refill its buffer to a safer value. In this case, the error-friendly samples are duplicated, as illustrated in Figure 8.

In Figure 8, two audio samples are duplicated once each, as shown by the thick lines (which are the duplication of their previous sample). This means that the internal time after duplication is the same as the time before duplication. For example, the audio sample rendered between 180 ms and 216 ms is duplicated, and the internal time after the duplication is also 216 ms. To keep the synchronization, the video has to be duplicated also, but it is not true video duplication in a sense, as the preferred solution is that the rendering device just displays the video image for longer than its original duration of 40 ms on the screen. How much longer is equal to the length of the audio duplication, in the Figure 8, two audio duplications correspond to twice 36 ms=72 ms of additional audio duration. The video has to be extended by this same duration, so in one embodiment, as presented in the Figure 8, the first video sample is extended by 32 ms, the second one is extended by 40 ms, and the synchronization is caught up. The skilled person will appreciate that other durations of the extensions are possible.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. An encoder (122) for digital content (CNT) comprising:
an analysis module (123) adapted to analyse the digital content (CNT) semantically so as to detect samples of the content that can be dropped or duplicated with minimum effect to the digital content (CNT) when it is rendered; and
an encoding module (124) adapted to encode the digital content (CNT) and to tag the encoded content (CNT') so as to indicate the samples of the digital content (CNT) that can be dropped or duplicated with minimum effect to the digital content (CNT) when it is rendered, following information received to this end from the analysis module (123).

2. The encoder (122) according to claim 1, wherein the analysis module is adapted to decide that a sample can be dropped or duplicated with minimum effect to the digital content (CNT) when it is rendered is taken if a difference between the sample and a preceding sample is below a threshold value.

3. A method for encoding digital content (CNT) comprising the steps of:
performing a semantic analysis of the digital content (CNT) so as to detect samples of the content that can be dropped or duplicated with minimum effect to the digital content (CNT) when it is rendered;
encoding the digital content (CNT) to obtain samples of encoded content (CNT'); and
tagging the samples of encoded content so as to indicate samples of digital content that can be dropped or duplicated with minimum effect to the digital content (CNT) when it is rendered.

4. The method according to claim 3, wherein it is detected that a sample of digital content that can be dropped or duplicated with minimum effect to the digital content (CNT) when it is rendered if a difference between the sample a preceding sample is below a certain threshold.

5. The method according to claim 3 or 4, wherein the content is audiovisual content.

6. A decoder (142) for encoded digital content (CNT'), the decoder comprising:
a reading module (143) adapted to read tags of samples of the encoded content (CNT') so as to detect samples of corresponding decoded digital content (CNT) that may be dropped or duplicated;
a decoding module (144) for decoding encoded digital content (CNT') to obtain samples of decoded digital content (CNT);
a buffer (146) for storing the samples; and
a module (145) for controlling the duplication or the dropping of samples of decoded digital content according to information provided by the reading module (143).

7. The decoder according to claim 6, wherein the controlling module (145) is adapted to, if the decoded digital content (CNT) comprises a continuous component and a discrete component, the components being synchronized, drop or duplicate samples of the continuous component and modify rendering of the discrete component to keep the synchronization.
